# EUROPEAN PATENT APPLICATION

(11) **EP 2 061 182 A1**
(43) Date of publication of application: **20.05.2009**
(21) Application number: 08163475.0
(22) Date of filing: 02.09.2008
(51) Int. Cl.: H04L 12/14, H04L 29/06

(54) **Method and system of sending reminding content from an online charging system to an application server which generates one reminding message for the subscriber**

(30) Priority: 19.11.2007 CN 200710177633
(71) Applicant: Huawei Technologies Co., Ltd., Longgang District, Shenzhen, Guangdong 518129 (CN)
(72) Inventor: Tang, Qinghua, Shenzhen Guangdong 518129 (CN)
(74) Representative: Thun, Clemens

(57) **Abstract**

The application relates to an evolved telecommunication network including three layers: a service bearer layer, a service control layer, and a charging layer. In such a network, a device in the service control layer (service control NE device) sends a service reminder through a short message sending module to a subscriber party, e.g. "you have successfully subscribed the RBT music xyz", and a device in the charging layer, an online charging system network element device (OCS NE device) sends a charging information reminder to the subscriber party, e.g. "the tariff is 2.00 yuan". Therefore, the subscriber party may receive two short message reminders successively which might confuse the subscriber party.
This problem is solved in that the charging information reminder is sent from the OCS NE device to the service control NE device which combines this reminding content with its own reminding content and sends only one reminding message to the subscriber party.
The method includes the following steps: a charging network element (NE) device packages the content for reminding a subscriber in a message and sends the packaged message to a service control NE device. After receiving the packaged message, the service control NE device extracts the content for reminding the subscriber, generates a reminding message according to the extracted content and sends the reminding message to a subscriber party. The system includes a charging NE device and a service control NE device. The charging NE device includes a judgment module, a packaging module and a sending module. The service control NE device includes a receiving module, an extraction module, a message generating module and a message sending module.

## Description

This application claims priority to Chinese Patent Application No. 200710177633.X, filed on November 19, 2007, entitled "METHOD, SYSTEM AND DEVICE FOR SENDING REMINDING MESSAGE", which is incorporated herein by reference in its entirety.

### FIELD OF THE INVENTION

The present invention relates to the communication field, and more particularly to a method and system for sending reminding message.

### BACKGROUND

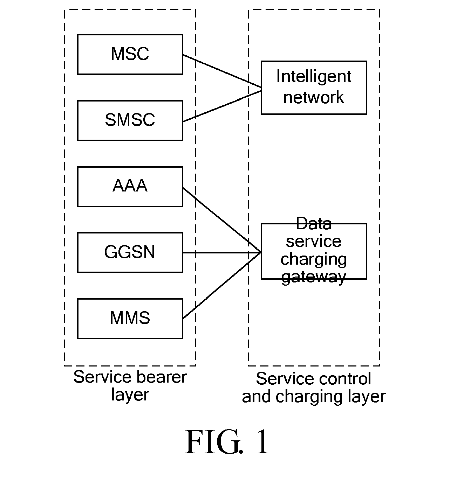

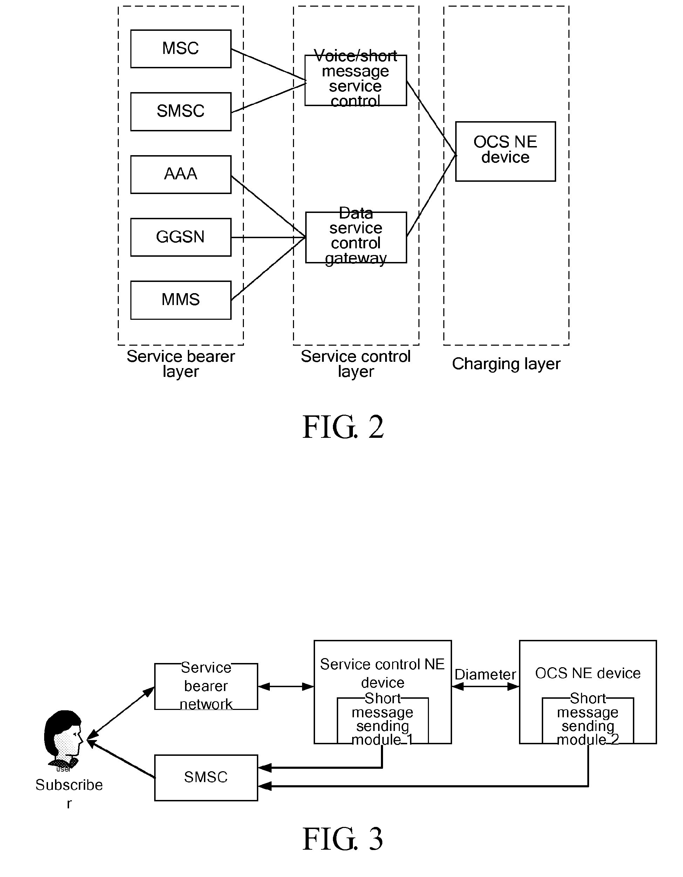

With the development of telecommunication services, single-service and split telecommunication charging systems are evolving towards integrated charging systems. For example, a conventional intelligent network and data service charging gateway are both evolving towards an integrated charging system. Figure 1 is a structural view illustrating a conventional telecommunication network including two layers: a service bearer layer and a service control and charging layer. Figure 2 is a structural view illustrating an evolved telecommunication network including three layers: a service bearer layer, a service control layer, and a charging layer. It can be seen that, in the evolved telecommunication network, a charging function is separated from the service control and charging layer and is in the charge of an added online charging system (OCS) network element (NE) device. The OCS NE device generally has functions of rating, charging, balance management and account management, etc. A service control function connected to and interacting with the bearer network remains in a service control layer NE device.

The service control layer and the OCS generally conform to the 3rd Generation Partnership Project (3GPP) standard, and a Ro interface based on a Diameter protocol is employed between the service control layer and the OCS. During a service usage, the service control layer NE device collects charging information and packages the information in a Diameter message to report it to the OCS NE device. After receiving the Diameter message, the OCS NE device performs an authentication processing and a charging processing and returns a result to the service control layer NE device.

In the telecommunication services, short message has been widely used as a friendly way for reminding the subscriber so as to enhance consumption transparency, improve customer service experience and increase customer loyalty to the network.

The system sends short messages to remind the subscriber in the following two situations.

In one situation, the system sends the short message to remind the subscriber initiatively at a fixed time. For example, the system scans a validity period of the subscriber every day and sends the short message to the subscriber to be expired in advance.

In another situation, during the service usage, the system sends the short message to remind the subscriber on line. For example, before the subscriber's call is connected through, the system discovers that the balance of the subscriber is not enough and sends the short message to remind the subscriber. Or, after the subscriber's call is terminated, the system sends information about a call duration and tariff information, etc., of this call to the subscriber through the short message.

In the conventional charging network, for example, the telecommunication network, the system sending the short message reminder is generally the service control and charging layer NE device, such as the intelligent network or a data service charging gateway. In an evolved charging network, for example, the telecommunication network, the OCS NE device serving as an NE device for service authentication, the charging, the balance management and the account management also has the function of triggering the short message reminder, and the service control layer NE device still has the function of sending the short message reminder. That is, in the evolved charging network, the OCS NE device and the service control layer NE device both have the function of sending the short message reminder.

Figure 3 is a schematic view illustrating short message reminding performed by a conventional evolved charging network. Such evolved charging network generally performs the short message reminding in the following manner.

The service control layer NE device sends a service reminder to a subscriber party through a short message sending module 1, i.e., to continue employing an original short message reminding function. The OCS NE device sends a charging information reminder to the subscriber party through a short message sending module 2. Sometimes, the subscriber party may receive the short message reminders sent by the two NE devices successively.

In the process of implementing the present invention, the inventor has discovered at least the following disadvantages in the above prior art:

1) Extra development volume and cost appear due to the addition of the short message sending module in the OCS NE device.

2) When the subscriber uses the same service (for example, a voice call service or a short message service), the service control layer NE device and the OCS NE device may respectively send the short message reminder to the subscriber, thus causing confusion of the subscriber.

3) The short messages sent by the service control layer NE device and the OCS NE device are separated in content and may not be organically combined, thereby failing to serve the subscriber better.

4) The short messages sent by the service control layer NE device and the OCS NE device are difficult to be synchronized in time, thus reducing the service experience of the subscriber.

### SUMMARY

To enhance the practicability of message reminding, embodiments of the present invention provide a method and system for sending reminding message by embodiments. The technical schemes are as follows.

A method for sending reminding message is provided. The method includes the following steps:

A message packaged with content for reminding a subscriber is received.

The content for reminding the subscriber is extracted and a reminding message is generated according to the extracted content.

The reminding message is sent to a subscriber party.

In an embodiment of the present invention, a system for sending reminding message including a charging network element (NE) device and a service control NE device is provided.

The charging NE device is adapted to package content for reminding a subscriber in a message and send the packaged message.

The service control NE device is adapted to receive the packaged message sent by the charging NE device, extract the content for reminding the subscriber from the packaged message, generate a reminding message according to the extracted content and send the reminding message to a subscriber party.

Further, in an embodiment of the present invention, a charging NE device including a judgment module, a packaging module and a sending module is provided.

The judgment module is adapted to judge whether there is the content for reminding a subscriber created by the charging NE device.

The packaging module is adapted to package the content for reminding the subscriber in a message if the determination result of the determination module is that there is the content for reminding the subscriber created by the charging NE device.

The sending module is adapted to send the message packaged with the content for reminding the subscriber by the packaging module to a service control NE device.

In an embodiment of the present invention, a service control NE device including a receiving module, an extraction module, a message generating module and a message sending module is also provided.

The receiving module is adapted to receive a message packaged with the content for reminding a subscriber.

The extraction module is adapted to extract the content for reminding the subscriber from the packaged message received by the receiving module.

The message generating module is adapted to generate a reminding message according to the content extracted by the extraction module.

The message sending module is adapted to send the reminding message generated by the message generating module to a subscriber party.

The technical schemes provided in the embodiments of the present invention achieve the following beneficial effects.

The charging NE device sends the content for reminding the subscriber to the service control NE device and the service control NE device accordingly generates the reminding message, thereby achieving the purpose for reminding the subscriber. Meanwhile, the confusion caused as the charging NE device and the service control NE device respectively send the reminding message to the subscriber in the prior art can be avoided.

### BRIEF DESCRIPTION OF THE DRAWINGS

The present invention becomes more fully understood from the detailed description given herein below for illustration only, and thus are not limitative of the present invention, and wherein:

Figure 1 is a structural view illustrating a conventional telecommunication network in the conventional technology;

Figure 2 is a structural view illustrating an evolved telecommunication network in the conventional technology;

Figure 3 is a schematic view illustrating short message reminding performed by an evolved charging network in the conventional technology;

Figure 4 is a flow chart illustrating a method for sending reminding message in accordance with a first embodiment of the present invention;

Figure 5 is a schematic view illustrating format of a message header of a Diameter message in accordance with the first embodiment of the present invention;

Figure 6 is a schematic view illustrating the format of an attribute value pair (AVP) in accordance with the first embodiment of the present invention;

Figure 7 is a schematic structural view illustrating a system for sending reminding message in accordance with a second embodiment of the present invention;

Figure 8 is a schematic structural view illustrating a charging NE device in accordance with a third embodiment of the present invention; and

Figure 9 is a schematic structural view illustrating a service control NE device in accordance with a fourth embodiment of the present invention.

### DETAILED DESCRIPTION

In order to make the aforementioned objectives, technical schemes, and advantages of the embodiment of the present invention comprehensible, embodiments accompanied with figures are described in detail below.

The charging NE device in the embodiment of the present invention packages the content for reminding subscriber in the message and sends the packaged message to the service control NE device. After receiving the packaged message, the service control NE device extracts the content from the designated field, generates the reminding message according to the extracted content and sends the reminding message to the subscriber party.

In the above embodiment, the content for reminding the subscriber may be packaged in the designated field of the message.

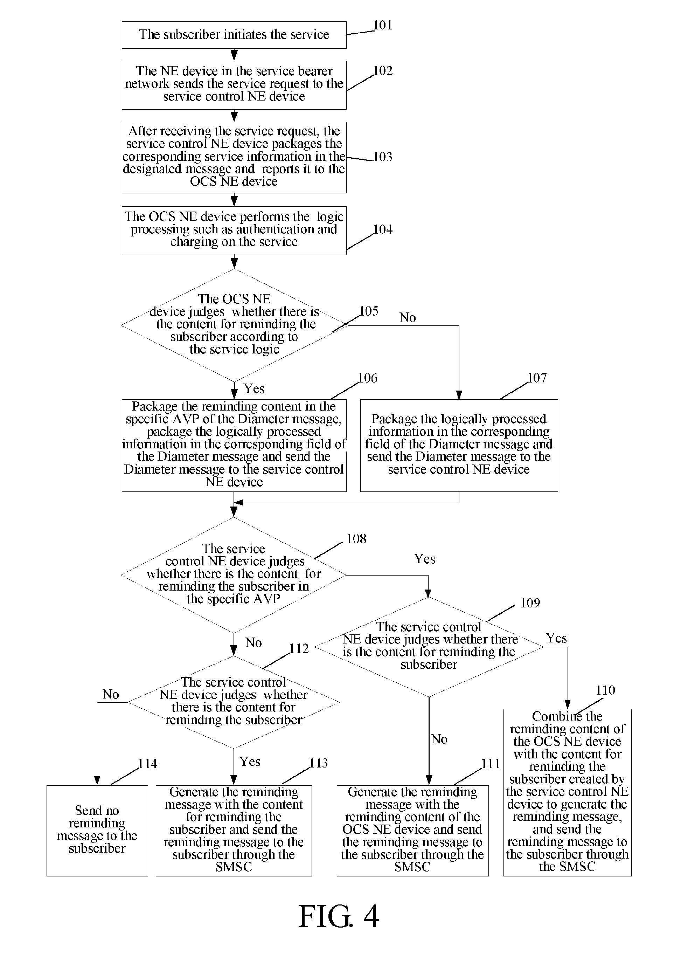

Referring to Figure 4, a method for sending reminding message is provided in the embodiment of the present invention. For example, a subscriber initiates a service to the service control NE device through a service bearer network. The method includes the following steps:

Block 101: The subscriber initiates a service.

The service initiated by the subscriber may be a call dialing, short message sending, network access through Wireless Application Protocol (WAP) and so on.

Block 102: After receiving the service initiated by the subscriber, the NE device in the service bearer network sends a service request, for example, a request for authentication, charging and service usage, etc., to the service control NE device.

Block 103: After receiving the service request sent by the NE device in the service bearer network, the service control NE device packages corresponding service information in the designated message and reports it to an OCS NE device.

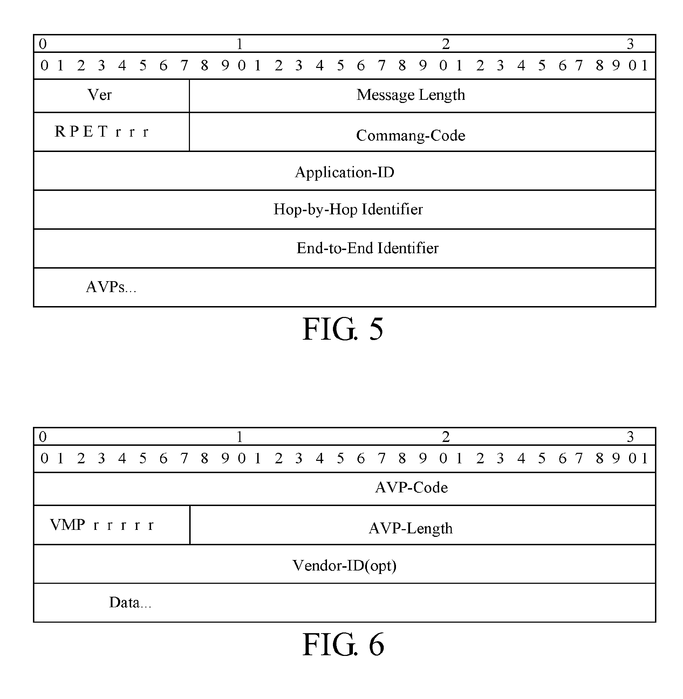

For example, the service information includes the information about the authentication, charging, service usage and so on. The designated message may be any message pre-negotiated by the service control NE device and the OCS. The designated message is the Diameter message in this embodiment. The Diameter message is composed of a message header and a message body. The format of the message header is shown in Figure 5.

Command-Code is adapted to represent a corresponding command of this message, and one command code is shared by a request message and a corresponding reply message.

Application-ID, Hop-by-Hop Identifier and End-to-End Identifier all have 4 bytes. The Application-ID is adapted to indicate an application suitable for the message, the Hop-by-Hop Identifier is adapted to judge a corresponding relation between the request and reply, and the End-to-End Identifier is mainly adapted to repeat the checking of the message.

The message body of the Diameter message takes the AVP as its unit, and each AVP carries a specific message parameter value.

Each AVP contains an AVP header and a Data part. The format of the AVP is shown in Figure 6.

AVP Code: the type of AVP, for example, a Code value of an Original-Host AVP is 264.

V: whether a Vendor-ID field appears in the current AVP header.

M: whether the current AVP is a required AVP. For a specific Diameter command, some AVPs can be necessary. For example, the Original-Host AVP and Original-Realm AVP may appear in any Diameter message, and the Session-ID AVP may appear in a charging application command word of the Diameter.

P: whether the data part of the current AVP has been encrypted.

AVP Length: the length of the data part contained in the current AVP. It should be noted that, the length of the data part of any AVP may be an integer multiple of 4, and those insufficient should be supplemented with "\0".

Vendor-ID: optional, configured to identify vendor of the device for generating the current AVP value.

Data: for recoding specific data values. The type of the data is determined by the AVP Code.

Block 104: After receiving the service information sent by the service control NE device, the OCS NE device performs logic processing, such as authentication and charging, on the service.

Block 105: The OCS NE device judges whether there is the content for reminding the subscriber according to a service logic (for example, corresponding account number information of the service). If there is the content for reminding the subscriber, Block 106 is executed. If the there is no content for reminding the subscriber, Block 107 is executed.

Block 106: The content for reminding the subscriber is packaged in a specific AVP of the Diameter message, logically processed information is packaged in the corresponding field of the Diameter message and the Diameter message is sent to the service control NE device.

In addition, there is no specific AVP of the Diameter message packaged with the content for reminding the subscriber in a standard Diameter message and is extended for storing the content of the short message (i.e., the content for reminding the subscriber). Moreover, the extension of the content stored in the AVP is independent from other fields of the Diameter message, and may be customized upon the demands of business rules, so the structure of the Diameter message itself stays unchanged.

The content for reminding the subscriber is packaged in the specific AVP, for example, an extended AVP in Table 1 of the Diameter message. The format of the extended AVP is shown in Table 1:

**Table 1**

| AVP | Note |
|---|---|
| [ Service-Information ] | |
| [IN-Information ] | |
| ... | |
| [Notice-Information] | Content block of short message reminder |
| [MessageCount] | Number of short messages |
| [MessageContent1] | Short message content 1 |
| [MessageContent2] | Short message content 2 |
| [MessageContent3] | Short message content 3 |
| [MessageContent4] | Short message content 4 |
| [MessageContent5] | Short message content 5 |
| [MessageContent6] | Short message content 6 |

Block 107: The logically processed information is packaged in the corresponding field of the Diameter message, and the Diameter message is sent to the service control NE device.

Block 108: After receiving the Diameter message sent by the OCS NE device, the service control NE device performs the service logic processing and judges whether the specific AVP of the Diameter message returned by the OCS NE device contains the reminding content. If the specific AVP of the Diameter message returned by the OCS NE device contains the reminding content, Block 109 is executed. If the specific AVP of the Diameter message returned by the OCS NE device does not contain the reminding content, Block 112 is executed.

After the service control NE device performs the service logic processing, the bearer NE device provides/rejects the service for the subscriber according to the service control result of the service control NE device.

Block 109: The service control NE device judges whether there is the content for reminding the subscriber created by the service control NE device. If there is the content for reminding the subscriber created by the service control NE device, Block 110 is executed. If there is no content for reminding the subscriber created by the service control NE device, Block 111 is executed.

For example, when the subscriber applies for a new service, the service control NE device needs to remind the subscriber of the issue.

Block 110: The content for reminding the subscriber created by the OCS NE device in the specific AVP of the Diameter message returned by the OCS NE device is combined and assembled with the content for reminding the subscriber created by the OCS NE device to generate the reminding message, and the reminding message is sent to the subscriber through an SMSC.

Block 111: The reminding message is generated with the content for reminding the subscriber in the specific AVP of the Diameter message returned by the OCS NE device, and the reminding message is sent to the subscriber through the SMSC.

Block 112: If the content in the specific AVP of the Diameter message returned by the OCS NE device is null, the service control NE device judges whether there is the content for reminding the subscriber created by the OCS NE device. If there is the content for reminding the subscriber created by the OCS NE device, Block 113 is executed. If there is no content for reminding the subscriber created by the OCS NE device, Block 114 is executed.

Block 113: The reminding message is generated with the content for reminding the subscriber created by the OCS NE device, and the reminding message is sent to the subscriber through the SMSC.

Block 114: The reminding message is not sent to the subscriber.

The above reminding message sent by the service control NE device to the SMSC is the short message. The service control NE device and the SMSC adopt SMPP protocols. A multimedia reminding message may also be sent upon requirements. In the case of the multimedia reminding message, the service control NE device sends the multimedia reminding message to a multimedia message service center (MMSC), and the multimedia reminding message is sent to the subscribers through the MMSC.

Through the above method, the original short messages respectively sent by the service control NE device and the OCS NE device may be combined into one short message and sent to the subscriber. For example, the reminding content returned by the OCS NE device is "the tariff is 2.00 yuan and the expiry date is November 30th, 2007", while the reminding content of the service control NE device is "you have successfully subscribed the RBT music Love Me One More Day". If the above two short messages are sent by the two NE devices separately to the subscriber, the subscriber is confused. Thereby, through the above method, the service control NE device would combine the two pieces of reminding content into "you have successfully subscribed the RBT music Love Me One More Day, the tariff is 2.00 yuan, and the date of expiry is November 30th, 2007", so as to avoid confusing the subscriber and to improve the subscriber experience.

Besides, the above method may add a message processing NE adapted to receive the message in the OCS and the message containing the reminder information in the service control NE, combine the message in the OCS and the message containing reminding information in the service control NE into one message and send the combined message to the subscriber.

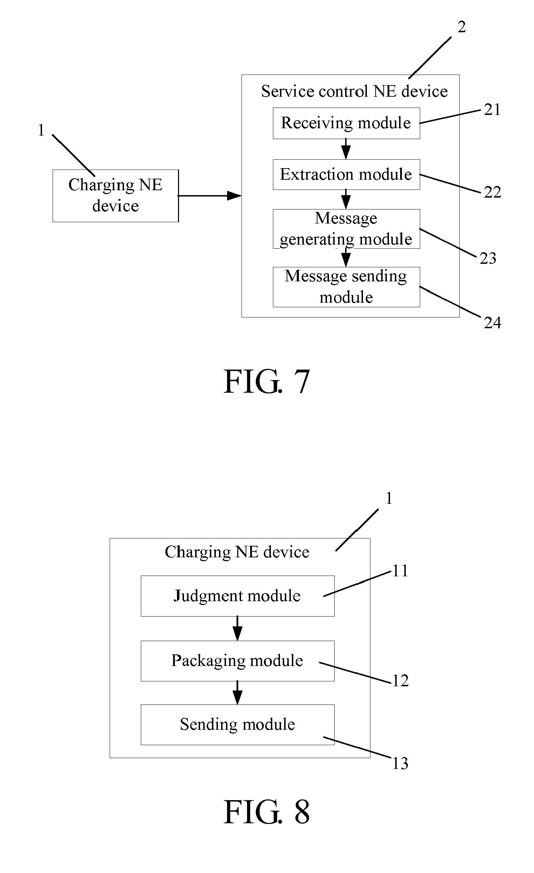

Referring to Figure 7, a system for sending reminding message is provided in this embodiment. The system for sending reminding message includes the charging NE device 1 and the service control NE device 2.

The charging NE device 1 is adapted to package the content for reminding the subscriber in the message and send the packaged message.

The service control NE device 2 is adapted to receive the packaged message sent by the charging NE device 1, extract the content for reminding the subscriber from the packaged message, generate the reminding message according to the extracted content and send the reminding message to the subscriber party.

In addition, the service control NE device 2 includes the receiving module 21, the extraction module 22, the message generating module 23 and the message sending module 24.

The receiving module 21 is adapted to receive the message packaged with the content for reminding the subscriber.

The extraction module 22 is adapted to extract the content for reminding the subscriber from the packaged message received by the receiving module 21.

The message generating module 23 is adapted to generate the reminding message according to the content extracted from the extraction module 22.

The message sending module 24 is adapted to send the reminding message generated by the message generating module 23 to the subscriber party.

A Ro interface based on a Diameter protocol is employed between the above service control NE device 2 and the charging NE device 1 (for example, the OCS NE device) to perform a message exchange. The charging NE device 1 triggers an online short message reminding according to the service logic and packages the reminding content in the AVP (extended AVP) of the Diameter message. The charging NE device 1 returns the reminding content to the service control NE device 2, and the service control NE device 2 combines, assembles or converts the received content together with the reminding content triggered by the service control NE device 2 into one reminding message.

The charging NE device 1 in this embodiment does not directly send the short message to remind the subscriber nor needs to have the function of sending the short message.

In this embodiment, the charging NE device 1 sends the reminding content to the service control NE device 2, and the service control NE device 2 generates the reminding message according to the received reminding content. Thereby, the system is simplified and the functions thereof are further improved, the subscriber experience is also enhanced and unnecessary short message confusions can be avoided.

Referring to Figure 8, a charging NE device 1 is provided in this embodiment.
The charging NE device 1 includes the judgment module 11, the packaging module 12 and the sending module 13.

The judgment module 11 determines whether there is the content for reminding the subscriber created by the charging NE device 1.

The packaging module packages the content for reminding the subscriber created by the charging NE device 1 if the judgment result of the judgment module 11 is that there is the content for reminding the subscriber created by the charging NE device 1.

The sending module 13 sends the message packaged with the content for reminding the subscriber by the packaging module to the service control NE device 2.

The charging NE device 1 in this embodiment may be the OCS NE device. In addition to the above functions, the OCS NE device also has the functions of performing authentication, rating, charging, balance management, account management and so on. However, the charging NE device 1 does not directly send the short message to remind the subscriber nor needs to have the function of sending the short message. Thereby, the charging NE device 1 is required to send the original service exchange message carrying the reminding content to the service control NE device 2. Therefore, the device structure is simplified and the expense of message sending is reduced.

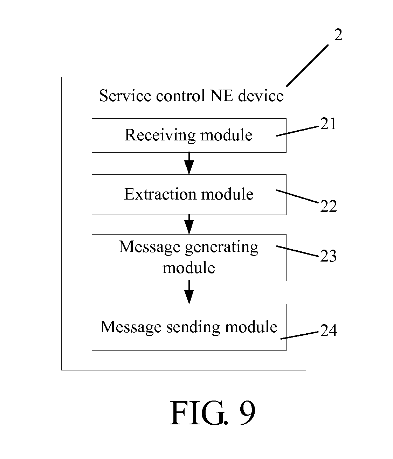

Referring to Figure 9, a service control NE device 2 is provided in this embodiment. The service control NE device 2 includes a receiving module 21, an extraction module 22, a message generating module 23 and a message sending module 24.

The receiving module 21 is adapted to receive the message packaged with the content for reminding the subscriber.

The extraction module 22 is adapted to extract the content for reminding the subscriber from the packaged message received by the receiving module 21.

The message generating module 23 is adapted to generate the reminding message according to the content extracted from the extraction module 22.

The message sending module 24 is adapted to send the reminding message generated by the message generating module 23 to the subscriber party.

In addition, the message generating module 23 includes the judgment unit and the message generating unit.

The judgment unit is adapted to judge whether there is the content for reminding the subscriber created by the service control NE device 2.

The message generating unit is adapted to combine the content for reminding the subscriber created by the service control NE device 2 with the content extracted from the extraction module 22 to generate the reminding message if the judgment result of the judgment unit is that there is the content for reminding the subscriber created by the service control NE device 2, and generate the reminding message with the content extracted from the extraction module 22, if the judgment result of the judgment unit is that there is no content for reminding the subscriber created by the service control NE device 2 .

In addition to the above functions, the service control NE device 2 in this embodiment closely cooperates with the service bearer network to implement the service control function. When it is needed to send the reminding content, the charging NE device 1 sends the reminding content to the service control NE device 2 provided by this embodiment instead of directly sending to the subscriber. The service control NE device 2 generates the reminding message to remind the subscriber of the service condition and charge information, thus avoiding causing confusion to the subscriber by the short messages.

The content of the technical schemes provided by the above embodiments may be completely or partially implemented via software programming. The software programs are stored in a readable storage medium, for example, a hard disk, optical disk, or floppy disk in the computer.

Though illustration and description of the present disclosure have been given with reference to exemplary embodiments thereof, it should be appreciated by persons of ordinary skill in the art that various changes in forms and details can be made without deviation from the spirit and scope of this disclosure, which are defined by the appended claims.

## Claims

1. A method for sending reminding message, comprising:
receiving a message packaged with content for reminding a subscriber;
extracting the content for reminding the subscriber and generating a reminding message according to the extracted content; and
sending the reminding message to a subscriber party.

2. The method for sending reminding message according to claim 1, wherein the generating the reminding message according to the extracted content comprises:
judging whether there is the content for reminding the subscriber created by a service control network element device; if there is the content for reminding the subscriber created by the service control network element device, combining the content for reminding the subscriber created by the service control network element device with the content extracted from a designated field to generate the reminding message.

3. The method for sending reminding message according to claim 1, wherein the generating the reminding message according to the extracted content comprises:
judging whether there is the content for reminding the subscriber created by a service control network element device; if there is no content for reminding the subscriber created by the service control network element device, generating the reminding message with the content extracted from the designated field.

4. The method for sending reminding message according to claim 3, wherein the message is a Diameter message, and correspondingly, the designated field is an extended attribute value pair (AVP) field.

5. The method for sending reminding message according to claim 1, wherein the reminding message is a short message or a multimedia message.

6. A system for sending reminding message, comprising:
a charging network element device adapted to package content for reminding a subscriber in a message and send the packaged message; and
a service control network element device adapted to receive the packaged message sent by the charging network element device, extract the content for reminding the subscriber from the packaged message, generate a reminding message according to the extracted content and send the reminding message to a subscriber party.

7. The system for sending reminding message according to claim 6, wherein the service control network element device specifically comprises:
a receiving module adapted to receive the packaged message sent by the charging network element device;
an extraction module adapted to extract the content in the packaged message received by the receiving module;
a message generating module adapted to judge whether there is the content for reminding the subscriber created by the service control network element device; if there is the content for reminding the subscriber created by the service control network element device, combine the content for reminding the subscriber created by the service control network element device with the content extracted from the extraction module to generate the reminding message; and if there is no content for reminding the subscriber created by the service control network element device, generate the reminding message with the content extracted from the extraction module; and
a message sending module adapted to send the reminding message generated by the message generating module to the subscriber party.

8. A charging network element device, comprising:
a judgment module adapted to judge whether there is content for reminding a subscriber created by the charging network element device;
a packaging module adapted to package the content for reminding the subscriber created by the charging network element device in a message if a judgment result of the judgment module is that there is the content for reminding the subscriber created by the charging network element device; and
a sending module adapted to send the message packaged with the content for reminding the subscriber by the packaging module to a service control network element device.

9. A service control network element device, comprising:
a receiving module adapted to receive a message packaged with content for reminding a subscriber;
an extraction module adapted to extract the content of the content for reminding the subscriber from the message received by the receiving module and packaged with the content for reminding the subscriber;
a message generating module adapted to generate a reminding message according to the content extracted from the extraction module; and
a message sending module adapted to send the reminding message generated by the message generating module to a subscriber party.

10. The service control network element device according to claim 9, wherein the message generating module specifically comprises:
a judgment unit adapted to judge whether there is the content for reminding the subscriber created by the service control network element device ; and
a message generating unit adapted to combine the content for reminding the subscriber created by the service control network element device with the content extracted from the extraction module to generate the reminding message if a judgment result of the judgment unit is that there is the content for reminding the subscriber created by the service control network element device; and generate the reminding message with the content extracted from the extraction module if the judgment result of the judgment unit is that there is no content for reminding the subscriber created by the service control network element device.
